# EUROPÄISCHE PATENTSCHRIFT

(11) **EP 1 113 870 B1**
(45) Veröffentlichungstag und Bekanntmachung des Hinweises auf die Patenterteilung: **05.03.2003**
(21) Anmeldenummer: 99940136.7
(22) Anmeldetag: 04.08.1999
(51) Int. Cl.: B01J 19/02, C08F 10/00

(54) **FESTSTOFFREAKTOR MIT ANTISTATISCHER BESCHICHTUNG ZUR DURCHFÜHRUNG VON REAKTIONEN IN DER GASPHASE**
SOLID REACTOR WITH AN ANTISTATIC COATING FOR CARRYING OUT REACTIONS IN A GASEOUS PHASE
REACTEUR POUR MATIERES SOLIDES COMPORTANT UN REVETEMENT ANTISTATIQUE ET PERMETTANT D'EFFECTUER DES REACTIONS EN PHASE GAZEUSE

(30) Priorität: 06.08.1998 DE 19835467
(43) Veröffentlichungstag der Anmeldung: 11.07.2001
(73) Patentinhaber: Basell Polyolefine GmbH, 77694 Kehl (DE)
(72) Erfinder: MIHAN, Shahram, D-67061 Ludwigshafen (DE); LANGE, Armin, D-69121 Heidelberg (DE); ROHDE, Wolfgang, D-67346 Speyer (DE)
(74) Vertreter: Meyer, Thomas
(86) Internationale Anmeldenummer: EP9905633
(87) Internationale Veröffentlichungsnummer: WO00007716

(56) Entgegenhaltungen:
- EP-A- 0 712 866
- WO-A-97/49771
- US-A- 4 105 841
- US-A- 4 166 536
- US-A- 4 267 291

## Beschreibung

Die vorliegende Erfindung betrifft Feststoffreaktoren zur Durchführung von Reaktionen in der Gasphase sowie Anlagenbauteile zum Handling fluidisch bewegter Feststoffe, deren Innenwandung mit einer dünnen antistatischen Schicht, welche im wesentlichen aus einem Poly-α-Olefin und einem nichtflüchtigen Antistatikum besteht, beschichtet ist. Sie betrifft weiterhin ein Verfahren zur Beschichtung derartiger Reaktoren und Anlagenbauteile, die Verwendung derartiger Reaktoren zur Polymerisation und Copolymerisation von α-Olefinen, sowie ein Verfahren zur Polymerisation von α-Olefinen unter Verwendung eines beschichteten Reaktors.

Bei der Polymerisation von α-Olefinen in der Gasphase kommt es häufig zu Belagbildung an den Wänden des Reaktors. Es ist bekannt, dass diese Belagbildung zumindest teilweise auf elektrostatische Aufladung zurückzuführen ist, so z.B, offenbart von WO 86/07065. Aufgrund elektrostatischer Kräfte bleiben Katalysator- und Polymerpartikel auf der Wandung des Reaktors haften und backen schliesslich aufgrund freiwerdender Polymerisationswärme zu festen Belägen zusammen. Diese Beläge können abfallen und zu Verstopfungen des Produktaustragssystems führen. Sie stören dadurch den kontinuierlichen Betrieb solcher Polymerisationsanlagen, erhöhen den Reinigungsaufwand und können eine häufigere Abstellung der Anlage notwendig machen. Ausserdem wird beim Gasphasenwirbelschichtverfahren das Wirbelverhalten des Bettes dadurch nachteilig beeinflusst.

Auch beim Handling von Poly-α-Olefinen sind Probleme mit elektrostatischer Elektrizität bekannt. So kommt es z.B. beim Fördern von Poly-α-Olefinen in pneumatischen Fördersystemen oder beim Befüllen und Entleeren von Silos leicht zu elektrostatischer Aufladung, die zu Wandbelägen und zur Verstopfung führen kann. Elektrostatische Aufladung kann ausserdem die Ursache für Staubexplosionen sein.

Die elektrostatische Aufladung wird in komplexer Art und Weise von zahlreichen Systemparametern des Gasphasenpolymerisationsverfahrens beeinflusst, bspw. von der Teilchengrössenverteilung des Polymerisats und des Katalysators, der chemischen Zusammensetzung des Katalysators, der Reaktorinnentemperatur, dem Reaktionsdruck und der Zusammensetzung des Kreisgases.

Zur Lösung des Problems ist die Durchführung der Polymerisation in Gegenwart verschiedener Antistatika vorgeschlagen worden. So offenbart bspw. US 4,855,370 die Verwendung von Wasser als Antistatikum, US 5,026,795 Gemische aus Polysulfon-Copolymeren/Polyaminen und einer Sulfonsäure, EP-A 364 759 Kerostat® (Gemisch aus Chromstearylanthranilat, Calciummedialanat und Di-t-Butylphenol), EP-A 584 574 Mischungen von Alkoholphosphatsalzen und quartären Ammoniumsalzen, EP-A 653 441 die Verwendung Naphthochinondimerverbindungen und EP-A 636 636 Metallsalze der Anthranilsäure. Speziell für die α-Olefin-Polymerisation mit Metallocen-Katalysatoren wurde die Verwendung von Stadis® 450 (EP-A 803 514, Polyamin/Polysulfon) oder von besonders geeigneten Aminen (EP-A 811 638) vorgeschlagen. Weiterhin wurde von US 4,803,251 vorgeschlagen, das elektrostatische Potential während der Polymerisation im Reaktor zu messen und je nach Vorliegen von positiver oder negativer Überschussladung genau die richtige Menge entweder von Methanol oder Methylisobutylketon zur Neutralisation der jeweiligen Ladung einzusetzen. Der Mess- und Regelaufwand für dieses Verfahren ist allerdings hoch.

Zwar lassen sich die Probleme mit Belägen an der Reaktorwand mit den geschilderten Verfahren weitgehend lösen, aber alle haben gemeinsam den Nachteil, dass das in den Reaktionsraum eingebrachte Antistatikum oder dessen Lösungsmittel, wie bspw. Propanol, die Aktivität der eingesetzten Katalysatoren vermindern kann. Somit werden nur niedrige Katalysatorproduktivitäten erzielt. Besonders Metallocen-Katalysatoren reagieren äusserst empfindlich auf polare Komponenten im Antistatikum. Weiterhin können polare Komponenten Katalysatoren modifizieren und somit die Produkteigenschaften verändern.

Es ist daher auch vorgeschlagen worden (WO 86/7065) die Reaktorwandung mit einer Chromocenverbindung zu behandeln, um die elektrostatische Aufladung des Reaktors zu vermindern. Diese Behandlung erfordert jedoch mehrere Stunden bis mehrere Tage. Außerdem ist Chromocen nur aufwendig und teuer herzustellen, sehr empfindlich gegenüber Verunreinigungen und daher schwer handhabbar. Des Weiteren hält die antistatische Wirkung nicht lange an.

Weiterhin wurde vorgeschlagen (RD 23803 (1984)), die Reaktorinnenwandung mit einer Zusammensetzung bestehend aus einem aromatischen Polyimid, Teflon sowie Pigmenten wie Chrom- oder Eisenoxiden zu besprühen und die Mischung zu vernetzen. Die derart gebildete Beschichtung hat eine Dicke von 1 - 3 mm. Eine derartige, dicke teflon-haltige Schicht ist jedoch sehr teuer. Ausserdem kann das Aufsprühen und Vernetzen einer solchen Schicht nur bei geöffnetem Reaktor erfolgen, so dass die Beschichtung sowie eventuell notwendige Reparaturen der Beschichtung nur nach einer Abstellung der Produktionsanlage erfolgen können.

Eine Beschichtung mit vergleichsweise weichen Polymeren ist generell problematisch, da befürchtet werden muss, dass sie durch harte Bestandteile der Wirbelschicht, wie z.B. Katalysatorpartikel abgerieben werden könnte.

Aufgabe der Erfindung war es daher, eine antistatische Beschichtung für Feststoffreaktoren zur Durchführung von Reaktionen in der Gasphase zu finden, die billig, einfach und schnell aufzubringen und zu reparieren ist, die eine lange Haltbarkeit aufweist und die insbesondere unter den Bedingungen zur Polymerisation von α-Olefinen in der Gasphase nicht abgerieben wird.

Überraschenderweise wurde gefunden, dass eine derartige Beschichtung auf einfache Art und Weise aus Polyolefinen und nichtflüchtigen Antistatika hergestellt werden kann.

Demgemäss wurden Reaktoren zur Durchführung von Reaktionen in der Gasphase sowie Anlagenbauteile zum Handling von fluidisch bewegten Feststoffen gefunden, deren Innenwandung mit einer dünnen antistatischen Beschichtung einer Dicke von 0,1 - 800 µm beschichtet ist, welche im wesentlichen aus einem Poly-α-Olefin und einem nichtflüchtigen Antistatikum besteht. Weiterhin wurde ein Verfahren zur Beschichtung derartiger Reaktoren und Anlagenbauteilen, die Verwendung derartiger Reaktoren zur Polymerisation und Copolymerisation von α-Olefinen sowie ein Verfahren zur Polymerisation von α-Olefinen unter Verwendung beschichteter Reaktoren gefunden.

Bei den erfindungsgemässen Reaktoren handelt es sich um alle Reaktoren, die zur Durchführung von Reaktionen in der Gasphase eingesetzt werden können. Der Begriff Reaktion im Sinne dieser Erfindung ist nicht nur auf chemische Umsetzungen beschränkt, sondern umfasst auch andere Operationen der chemischen Verfahrenstechnik, die in der Gasphase durchgeführt werden können, wie beispielsweise Trocknungen oder Klassierungen in der Gasphase. Vorzugsweise werden die erfindungsgemässen Reaktoren für Reaktionen organischer Feststoffe, insbesondere für die Polymerisation von α-Olefinen in der Gasphase eingesetzt. Als Reaktortypen kommen insbesondere gerührte Autoklaven, Wirbelschichtreaktoren, gerührte Wirbelschichtreaktoren, Wirbelschichtreaktoren mit zirkulierender Wirbelschicht oder ein Strömungsrohre in Betracht.

Weiterhin können Reaktoren für andere Gasphasen-Operationen der chemischen Verfahrenstechnik erfindungsgemäss ausgerüstet werden, beispielweise Reaktoren die zur Trocknung fluidisch bewegter Feststoffe, insbesondere von organischen Feststoffen eingesetzt werden können, wie bspw. Wirbeltrockner oder Sprühtrockner.

Bei den erfindungsgemässen Anlagenbauteilen handelt es sich um alle Komponenten chemischer Anlagen, in denen Feststoffe, insbesondere organische Feststoffe und ganz besonders Poly-α-Olefine fluidisch bewegt werden, bspw. um Rohre und andere Bauteile von pneumatischen Fördersystemen oder Silos.

Die Innenwandung ist mit einer antistatisch wirkenden Schicht beschichtet. Bevorzugt ist der gesamte Reaktionsraum beschichtet, aber es können auch nur diejenigen Teile der Wandung des Reaktors beschichtet sein, auf denen sich im Zuge der Reaktion bevorzugt Beläge bilden können. Die Dicke der antistatischen Schicht auf der Reaktorwandung beträgt 0,1 bis 800 µm, insbesondere 1 bis 100 µm, besonders bevorzugt 5 bis 10 µm.

Die antistatische Schicht besteht im wesentlichen, d.h. zu mindestens 90 Gew.% bzgl. der Summe aller Bestandteile, aus einem Poly-α-Olefin und einem nichtflüchtigen Antistatikum.

Bevorzugte Poly-α-Olefine sind Polymere aus α-Olefinen mit 2 bis 8 Kohlenstoffatomen, insbesondere bevorzugt sind Polyethylen und Polypropylen. Die Erfindung umfasst weiterhin Copolymere aus verschiedenen α-Olefinen. Bevorzugte Comonomere für Polyethylen sind Propen, 1-Buten, 1-Penten, 4-Methyl-1-penten, 1-Hexen, 1-Hepten und 1-Octen sowie Gemische dieser α-Olefine. Die Poly-α-Olefine können ausserdem noch weitere Comonomere, bspw. solche mit polaren Gruppen wie (Meth)acrylsäure, (Meth)acrylate oder (Meth)acrylamid enthalten. Es ist aber bevorzugt, dass der Anteil derartiger Momomerer 5 mol % bzgl. der Summe aller Monomerer nicht überschreitet. Des weiteren können Mischungen aus 2 oder mehreren Polymeren eingesetzt werden.

Der Gehalt des nichtflüchtigen Antistatikums in der antistatischen Beschichtung beträgt 0,1 bis 50 Gew.-% bzgl. der Summe aller Bestandteile. Bevorzugt beträgt der Gehalt des Antistatikums 1 bis 25 Gew.-% und besonders bevorzugt 5 bis 15 Gew.-%.

Unter nichtflüchtig im Sinne dieser Erfindung sind alle Antistatika zu verstehen, die einen solch niedrigen Dampfdruck aufweisen, dass sie -eingebettet in eine Matrix aus Poly-α-Olefinen- bei Temperaturen von bis zu 150°C nicht oder allenfalls in geringsten Mengen in die Gasphase übergehen. Der Begriff Antistatikum umfasst nicht nur einzelne Verbindungen sondern auch Gemische verschiedener antistatisch wirkender Verbindungen.

Geeignete nichtflüchtige Antistatika sind beispielsweise feinteilige poröse Ruße, mehrwertige Alkohole und deren Ether wie beispielsweise Sorbit, Polyalkohole, Polyalkoholether, Polyvinylakohole, Polyethylenglykole und ihre Ether mit Fettalkoholen, anionenaktive Antistatika wie C₁₂- bis C₂₂-Fettsäureseifen von Alkali- oder Erdalkalimetallen, Salze von Alkylsulfaten höherer primärer oder sekundärer Alkohole der allgemeinen Formel ROSO₃M (M = Alkali-, Erdalkalimetall) oder (RR')CHOSO₃M, Salze von gemischten Estern von polyfunktionellen Alkoholen mit höheren Fettsäuren und Schwefelsäure, C₁₂- bis C₂₂- Sulfonsäuren oder deren Salze der allgemeinen Formel RSO₃M, Alkylarylsulfonsäuren oder deren Salze wie bspw. Dodecylbenzolsulfonsäure, Phosphorsäurederivate wie bspw. Di(alkoxypolyethoxyethyl)phosphate der allgemeinen Formel [RO(CH₂CH₂O)ₙ]₂POOM oder Phytinsäurederivate wie bspw. in EP-A 453116 offenbart, kationenaktive Antistatika wie quartäre Ammoniumsalze der allgemeinen Formel R₁R₂R₃R₄NX wobei X ein Halogenatom und R₁ bis R₄ Alkylreste, bevorzugt solche mit mindestens 8 C-Atomen sind. Weiterhin geeignet sind bspw. Metallkomplexe wie die in WO 93/24562 offenbarten Cyanophtalocyanine.

Besonders geeignete nichtflüchtige Antistatika sind nichtflüchtige stickstoffhaltige Verbindungen wie bspw. Amine oder Amide oder deren Salze, insbesondere oligomere oder polymere Amine und Amide. Als Beispiel seien Polyethoxyalkylamine bzw. -amide der allgemeinen Formel R₁N[(R₂O)ₘR][(R₃O)ₙH] bzw. R₁CON[(R₂O)ₘR][(R₃O)ₙH] wie in DE-A 31 088 43 beschrieben genannt, die auch Bestandteile kommerzieller Antistatika sind (z.B. Atmer® 163; Fa. ICI). Einsetzbar sind auch Salzgemische aus Calciumsalzen der Medialansäure und Chromsalzen der N-Stearylanthranilsäure, wie in DE-A 3543360 oder Mischungen aus einem Metallsalz der Medialansäure, einem Metallsalz der Anthranilsäure und einem Polyamin wie in EP-A 636 636 beschrieben.

Weiterhin besonders geeignet sind Polyamine bzw. Polyamin-Copolymere oder Gemische derartiger Verbindungen mit weiteren, insbesondere polymeren Verbindungen. Neben einfachen Polyaminen wie z.B. Polyvinylamin werden geeignete nichtflüchtige Polyamine vorteilhaft aus der Reaktion von aliphatischen primären Monoaminen wie bspw. n-Octylamin oder n-Dodecylamin oder N-alkylsubstituierten aliphatischen Diaminen wie bspw. N-n-hexadecyl-1,3-propandiamin und Epichlorhydrin erhalten. Diese Polymere verfügen neben Aminogruppen auch über Hydroxylgruppen. Eine Übersicht über derartige Polyamincopolymere ist in der US 3,917,466 enthalten. Zur gemeinsamen Anwendung mit Polyaminen oder Polyamin-Copolymeren besonders geeignete Polymere sind Polysulfoncopolymere. Bevorzugt sind die Polysulfoncopolymeren weitgehend unverzweigt und sind im molaren Verhältnis 1:1 aus Olefinen und SO₂-Einheiten aufgebaut. Beispielsweise sei 1-Decen-polysulfon genannt. Eine Übersicht über geeignete Polysulfoncopolymere ist auch in US 3,917,466 enthalten.

Mischungen von Polyaminen und Polysulfoncopolymeren sind auch Bestandteile kommerziell erhältlicher Antistatika wie z.B. Stadis® 450 (Fa. Du Pont) oder Polyflo®130 (Universal Oil Company).

Bevorzugt ist das nichtflüchtige Antistatikum homogen in der Polymermatrix verteilt.

Die Auswahl geeigneter Polymerer und geeigneter nichtflüchtiger Antistatika richtet sich nach dem jeweiligen Anwendungszweck und kann weitgehend frei getroffen werden. Sie ist nur insofern beschränkt als der Erweichungspunkt der antistatischen Beschichtung über der Temperatur, bei der die gewünschte Reaktion oder der Verfahrensschritt ausgeführt werden soll, liegen muss. Bervorzugt wird für die antistatische Beschichtung ein Polymer gleicher Art gewählt, welches auch produziert oder gehandelt werden soll, also bspw. eine polyethylenhaltige Beschichtung für die Produktion von Polyethylen.

Die erfindungsgemässe Schicht kann weitere Zusatzstoffe und Hilfsmittel in geringen Mengen, z.B. solche zur Verbesserung der Haftung der Schicht auf der Reaktorwandung enthalten. Die Menge derartiger Bestandteile sollte aber 10 Gew.% bzgl. der Summe aller Bestandteile keinesfalls überschreiten.

Die erfindungsgemässe Beschichtung kann mittels eines einfachen Verfahrens aufgebracht werden, indem man die Wandung des Reaktors oder des Anlagenbauteiles mit einem Poly-α-Olefin am Erweichungspunkt und einem nichtflüchtigen Antistatikum behandelt.

Das Verfahren kann beispielsweise ausgeführt werden, indem eine ausreichende Menge des gewünschten Poly-α-Olefins und des gewünschten Antistatikums in den Reaktor eingebracht wird. Die Mischung wird gleichmässig im Reaktor verteilt, z.B. durch Rühren mittels eines eingebauten Rührers oder durch Aufwirbeln mit einem Inertgastrom, bevorzugt einem Stickstoffstrom, und der Reaktor wird bis zum Erweichungspunkt des Polymeren erhitzt. Üblicherweise wird eine Temperatur von etwa 5 bis 15°C, bevorzugt 8 bis 10°C unterhalb der Schmelztemperatur des Polymeren gewählt. Das Antistatikum wird entweder feinverteilt als Feststoff oder vorteilhaft gelöst in geeigneten Lösungsmitteln zugegeben. Die Zugabe des Antistatikums kann vor, während oder unmittelbar nach dem Aufheizen erfolgen. Das Lösungsmittel sowie gegebenenfalls weitere im Antistatikum enthaltene flüchtige Bestandteile verdampfen ebenfalls, so dass nur die nichtflüchtigen Anteile des Antistatikums verbleiben. Die Dauer der Behandlung richtet sich nach den gewählten Bedingungen, ist im Regelfalle aber kürzer als 4 h. Die Behandlung des Reaktors kann bei Normaldruck aber auch bei erhöhtem Druck von vorzugsweise nicht mehr als 80 bar erfolgen. In Abhängigkeit von der Erweichungstemperatur des verwendeten Poly-α-Olefins, der Temperatur und der Beschichtungsdauer kann die Dicke der entstehenden antistatischen Schicht eingestellt werden.

Wenngleich die geschilderte Methode bevorzugt wird, ist die vorliegende Erfindung aber nicht darauf beschränkt, sondern umfasst auch, die Beschichtung auf andere Art und Weise auf die Innenwandung des Reaktors aufzubringen, so bspw. durch Lösen des Polymers und des nichtflüchtigen Antistatikums in einem geeigneten Lösungsmittel, Aufsprühen und Verdampfen des Lösungsmittels.

Der erfindungsgemässe Reaktor eignet sich hervorragend zur Polymerisation und Copolymerisation von α-Olefinen in der Gasphase. Besonders gut lassen sich Ethylen und Propylen und insbesondere Ethylen homo- oder copolymerisieren. Als Comonomere kommen insbesondere α-Olefine mit 3 bis 8 Kohlenstoffatomen, vor allem Propen, 1-Buten, 1-Penten, 4-Methyl-1-penten, 1-Hexen, 1-Hepten und 1-Octen sowie Gemische dieser α-Olefine in Betracht.

Die Polymerisation wird bei Temperaturen zwischen 30 und 150°C, vorzugsweise zwischen 80 und 120°C durchgeführt. Der Druck liegt zwischen 5 und 80 bar, vorzugsweise zwischen 20 und 60 bar.

Die Polymerisation kann nach verschiedenen Gasphasenverfahren unter Verwendung obiger antistatisch beschichteter Reaktoren durchgeführt werden, also beispielsweise in Gasphasen-Wirbelschicht oder in gerührten Gasphasen. Derartige Gasphasenverfahren sind an sich bekannt und beispielsweise in Ullmann's Encyclopedia of Industrial Chemistry, Vol. A 21, 4. Aufl. 1992, S. 511ff, beschrieben.

In dem erfindungsgemässen Verfahren können verschiedene Katalysatoren, wie sie zur Polymerisation von α-Olefinen üblich sind, eingesetzt werden. So kommen als Katalysatoren beispielsweise auch als Phillipskatalysatoren bekannte geträgerte Chromkatalysatoren in Betracht. Weiterhin können in dem erfindungsgemäßen Verfahren geträgerte Ziegler-Katalysatoren oder Ziegler-Natta-Katalysatoren eingesetzt werden. Übliche geträgerte Katalysatoren der oben genannten Arten werden beispielsweise in Ullmann's Encyclopedia of Industrial Chemistry, Vol. A 21, 4. Aufl. 1992, S 501 ff., beschrieben. Ausserdem kann als Katalysator oder als Bestandteil der Katalysatormischung ein geträgerter Metallocenkatalysator eingesetzt werden, wie bspw. von EP-A 803 514 offenbart. Es können auch andere metallorganische, polymerisationsaktive Komplexe eingesetzt werden.

Die erfindungsgemässe Beschichtung reduziert wirksam die elektrostatische Aufladung der erfindungsgemässen Reaktoren im Zuge der Polymerisation. Anstelle einer Aufladung bis zu mehreren tausend Volt ohne Beschichtung schwankt die Aufladung eines erfindungsgemäss beschichteten Reaktors nur noch um den Nullpunkt. Wandbeläge können dadurch fast vollständig vermieden werden, und die Ausbeuten der Reaktion steigen deutlich an. Diese Wirkung tritt überraschenderweise auch schon bei einer Schichtdicke von wenigen um auf.

Weiterhin hat die erfindungsgemässe Beschichtung den Vorteil, dass Sie innerhalb kurzer Zeit aufgebracht werden kann. Es können die üblichen, an der Anlage ohnehin vorhandenen Einlass- und Auslassstutzen zur Durchführung der Beschichtung verwendet werden, so dass zur Beschichtung keine Öffnung des Reaktors oder eventuell sogar eine Begehung erfolgen muss. Zur Verteilung der Beschichtungsagentien im Reaktor werden vorteilhaft die in den Reaktor eingebauten Rührer oder die Möglichkeiten zur Fluidisierung genutzt, und zur Beheizung werden vorteilhaft die ohnehin vorhandenen Heizungen eingesetzt. Durch die geringe Schichtdicke wird nur wenig Material zur Beschichtung verbraucht. Die Beschichtung des Reaktors ist somit billig.

Besonders überraschend weisen die erfindungsgemäss aufgebrachten antistatischen Schichten unter Betriebsbedingungen eine erstaunliche mechanische Stabilität und Haltbarkeit auf. Um die antistatische Schicht zu entfernen, muss die Innenwandung des Reaktors unter Verwendung eines abrasiven Mittels gründlich poliert werden. Die antistatische Wirkung hält über mehrere Monate an.

Die erfindungsgemässen Reaktoren tragen daher hervorragend zu einer wirtschaftlicheren Produktion von Poly-α-Olefinen bei.

Die folgenden Beispiele erläutern die Erfindung näher, ohne dass dadurch der Umfang der Erfindung eingeschränkt werden soll.

Die beschriebenen Messwerte wurden in folgender Art und Weise ermittelt:

| | |
|---|---|
| Dichte | nach ISO 1183 |
| Staudingerindex | nach ISO 1628 |
| Elektrisches Potential | gemessen mit einem handelsüblichen Feldstärkemeßgerät , die Messelektrode befand sich in der Mitte des Reaktors 2 cm oberhalb des Bodens, die Probenspitze war gegenüber der Reaktorwandung isoliert ; der Reaktor war geerdet. |
| Dicke des antistatischen Schicht | gemessen mittels Ultraschall über Laufzeitmessungen |

### Beispiel 1: Beschichtung des Reaktors

Ein 1 1-Autoklav wurde unter Stickstoffatmosphäre mit 300g Polyethylen des Typs Lupolen® 6021 D (Schmelzpunkt 131°C) gefüllt und unter ständigem Rühren bei 120°C und 30 bar Sickstoffatmosphäre mit 40 ml einer einer 25%igen Lösung des Antistatikums Stadis® 450 (Fa. Du Pont, Mischung aus Dodecylbenzolsulfonsäure, Copolymerem aus Epichlorhydrin und N-Alkyl-1,3-diaminopropan und einem alternierenden Polysulfoncopolymer aus 1-Decen und SO₂, Lösungsmittel: Toluol, Isopropanol und 1-Decen) in Hexan versetzt. Nach 3 h wurde der Autoklav entleert. Auf der Reaktorwand hatte sich eine Schicht aus Polyethylen und dem Antistatikum mit einer Dicke von 5 µm gebildet.

### Beispiel 2:

Es wurde wie in Beispiel 1 vorgegangen, jedoch mit Polyethylen des Typs Lupolen® 4261 A ( Schmelzpunkt 125°C) und einer Beschichtungstemperatur von 115°C. Die Dicke der gebildeten antistatischen Schicht betrug 7 µm.

### Beispiel 3:

Es wurde wie in Beispiel 1 vorgegangen, jedoch mit Polyethylen des Typs Lupolen® 3621 D (Schmelzpunkt 120°C) und einer Beschichtungstemperatur von 110°C. Die Dicke der gebildeten antistatischen Schicht betrug 10 µm.

### Beispiel 4:

### Herstellung eines Phillips-Katalysators mit 1% Cr-Gehalt

185 g Silcagel (SG 332, Fa. Grace) wurde in 400 ml einer Lösung von Cr(NO₃)₃*9 H₂O (3,56 Gew.% ) in Methanol suspendiert. Nach 30 min wurde Methanol abgezogen und die erhaltenen Katalysatorvorstufe bei 650°C mit Luft aktiviert.

### Beispiele 5 und 6:

In dem gemäss Beispiel 1 beschichteten Autoklaven wurden Polymerisationsversuche bei 110°C und 40 bar Ethylendruck mit dem in Beipiel 4 beschriebenen Chrom(VI)-Katalysator durchgeführt. Daten zu den Polymerisationsbedingungen, den Produkteigenschaften und dem elektrostatischen Verhalten während der Polymerisation sind in Tabelle 1 zusammengefasst.

### Beispiele 7 und 8:

In dem gemäss Beispiel 2 beschichteten Autoklaven wurden Polymerisationsversuche bei 110°C und 40 bar Ethylendruck mit dem in Beipiel 4 beschriebenen Chrom-Katalysator durchgeführt. Daten zu den Polymerisationsbedingungen, den Produkteigenschaften und dem elektrostaischen Verhalten während der Polymerisation sind in Tabelle 1 zusammengefasst.

### Beipiele 9 und 10:

In dem gemäss Beispiel 3 beschichteten Autoklaven wurden Polymerisationsversuche bei 110°C und 40 bar Ethylendruck mit dem in Beipiel 4 beschriebenen Chrom-Katalysator durchgeführt. Daten zu den Polymerisationsbedingungen, den Produkteigenschaften und dem elektrostatischen Verhalten während der Polymerisation sind in Tabelle 1 zusammengefasst.

### Vergleichsbeipiele 11 und 12

Es wurden Polymerisationsversuche bei 100°C und 40 bar Ethylendruck wie in den Beispielen 5 und 6 durchgeführt, nur wurde anstelle eines beschichteten Reaktors ein unbeschichteter Reaktor eingesetzt. Daten zu den Polymerisationsbedingungen, den Produkteigenschaften und dem elektrostatischen Verhalten während der Polymerisation sind in Tabelle 1 zusammengefasst.

### Vergleichsbeispiel 13

200 g eines 10 h bei 80°C getrockneten Polyethylengrießes der Dichte 0.9465 g/cm³ und einer High-Load-Melt-Flow-Rate von 6.5 g/10min wurden unter Stickstoff in einen unbeschichteten 11-Autoklaven eingefüllt. Es wurden 30 bar Stickstoff aufgepresst. Unter Rühren wurde der Autoklav innerhalb 30 Minuten auf 100°C aufgeheizt. Bei 400 Upm wurde eine Aufladung von -4500 V/m gemessen. Nach 1h Rühren wurde der Reaktor auf Raumtemperatur abgekühlt und geöffnet. Der Reaktorwand war mit einer 1cm dicken Polyethylengrießschicht bedeckt.

### Beispiel 14

Vergleichsbeispiel 13 wurde wiederholt, nur wurde ein gemäss Beispiel 3 beschichteter Reaktor eingesetzt. Die Feldstärkemessung zeigte keine Aufladung (±200V/m). Die Reaktorwand war frei von Polyethylenteilchen.

Die Beispiele zeigen, dass die elektrostatische Aufladung bei den Polymerisationsversuchen im beschichteten Reaktor erheblich kleiner ist als im unbeschichteten Reaktor. Bei den Versuchen im unbeschichteten Reaktor bildeten sich grosse Mengen an Wandbelägen, so dass die Ausbeute der Versuche deutlich reduziert war.

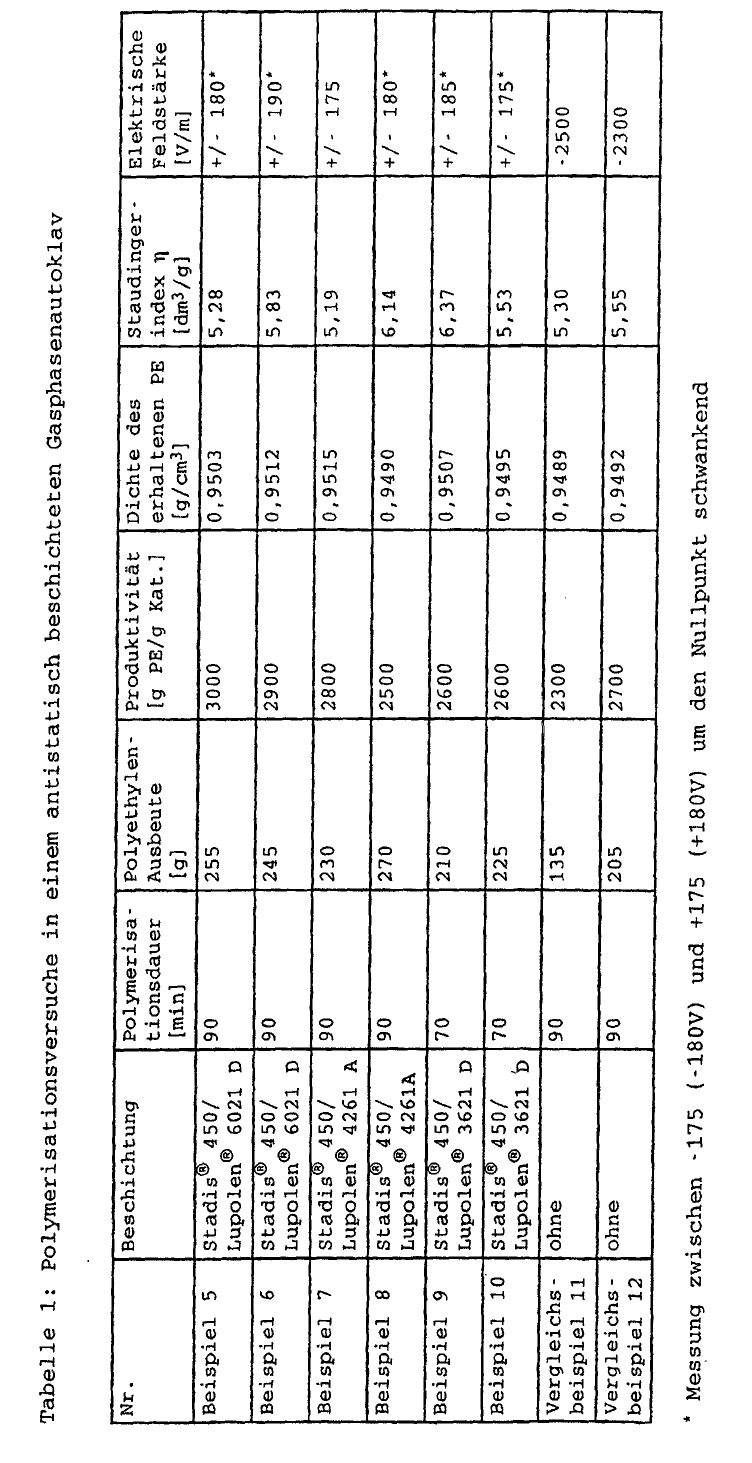

## Patentansprüche

1. Feststoffreaktor zur Durchführung von Reaktionen in der Gasphase, dessen Innenwandung mit einer antistatischen Schicht einer Dicke von 0,1 - 800 µm und im wesentlichen bestehend aus einem Poly-α-Olefin und einem nichtflüchtigen Antistatikum beschichtet ist.

2. Anlagenbauteile zum Handling fluidisch bewegter Feststoffe, deren Innenwandung mit einer antistatischen Schicht einer Dicke von 0,1 - 800 µm und im wesentlichen bestehend aus einem Poly-α-Olefin und einem nichtflüchtigen Antistatikum beschichtet ist.

3. Feststoffreaktor und Anlagenbauteile gemäss Anspruch 1 oder 2, **dadurch gekennzeichnet, dass** die antistatische Schicht 0,01 - 50 Gew.-% eines nichtflüchtigen Antistatikums enthält.

4. Feststoffreaktor und Anlagenbauteile gemäss Anspruch 1, 2 oder 3 **dadurch gekennzeichnet, dass** es sich bei dem nichtflüchtigen Antistatikum um stickstoffhaltige, oligomere oder polymere Verbindungen handelt.

5. Feststoffreaktor gemäss den Ansprüchen 1, 3 oder 4, **dadurch gekennzeichnet, dass** es sich bei dem Feststoffreaktor um einen gerührten Autoklaven, einen Wirbelschichtreaktor, einen gerührten Wirbelschichtreaktor, einen Wirbelschichtreaktor mit zirkulierender Wirbelschicht oder einen Rohrreaktor handelt.

6. Verfahren zur Beschichtung eines Feststoffreaktors zur Durchführung von Reaktionen in der Gasphase und von Anlagenbauteilen zum Handling von fluidisch bewegten Feststoffen, **dadurch gekennzeichnet, dass** man deren Innenwandung mit einem Poly-α-Olefin am Erweichungspunkt und einem nichtflüchtigen Antistatikum behandelt.

7. Verwendung eines beschichteten Reaktors gemäss Ansprüchen 1 und 3 bis 5 zur Polymerisation von α-Olefinen.

8. Verfahren zur Polymerisation oder Copolymerisation von α-Olefinen in der Gasphase bei einer Temperatur von 30 bis 150 °C und einem Druck zwischen 5 und 80 bar mit einem geträgerten Katalysator, **dadurch gekennzeichnet, dass** man die Polymerisation in einem beschichteten Feststoffreaktor nach einem der Ansprüche 1, 3, 4 oder 5 durchführt.

## Claims

1. A solids reactor for carrying out reactions in the gas phase whose inner wall is coated with an antistatic layer having a thickness of 0.1 - 800 µm and consisting essentially of a poly-α-olefin and a nonvolatile antistatic agent.

2. A plant component for handling fluidized solids whose inner wall is coated with an antistatic layer having a thickness of 0.1 - 800 µm and consisting essentially of a poly-α-olefin and a nonvolatile antistatic agent.

3. A solids reactor or plant component as claimed in claim 1 or 2, wherein the antistatic layer contains 0.01 - 50% by weight of a nonvolatile antistatic agent.

4. A solids reactor or plant component as claimed in claim 1, 2 or 3, wherein the nonvolatile antistatic agent is a nitrogen-containing, oligomeric or polymeric compound.

5. A solids reactor as claimed in claim 1, 3 or 4 which is a stirred autoclave, a fluidized-bed reactor, a stirred fluidized-bed reactor, a fluidized bed reactor with a circulating fluidized bed or a tube reactor.

6. A process for coating a solids reactor for carrying out reactions in the gas phase and for coating plant components for handling fluidized solids, which comprises treating their inner wall with a poly-α-olefin at the softening point and a nonvolatile antistatic agent.

7. The use of a coated reactor as claimed in any of claims 1 and 3 to 5 for the polymerization of α-olefins.

8. A process for the polymerization or copolymerization of α-olefins in the gas phase at from 30 to 150°C and a pressure of from 5 to 80 bar using a supported catalyst, wherein the polymerization is carried out in a coated solids reactor as claimed in any of claims 1, 3, 4 or 5.

## Revendications

1. Réacteur pour matières solides destiné à la réalisation de réactions en phase gazeuse, dont la paroi interne est revêtue d'une couche antistatique d'une épaisseur comprise entre 0,1 µm et 800 µm qui est constituée essentiellement d'une poly-α-oléfine et d'un agent antistatique non volatil.

2. Eléments constitutifs d'installation destinés au maniement de matières solides à mouvement fluidisé, dont la paroi interne est revêtue d'une couche antistatique d'une épaisseur comprise entre 0,1 µm et 800 µm qui est constituée essentiellement d'une poly-α-oléfine et d'un agent antistatique non volatil.

3. Réacteur pour matières solides et éléments constitutifs d'installation selon la revendication 1 ou 2, **caractérisés en ce que** la couche antistatique contient l'agent antistatique non volatil à raison de 0,01% à 50% en poids.

4. Réacteur pour matières solides et éléments constitutifs d'installation selon la revendication 1, 2 ou 3, **caractérisés en ce que** l'agent antistatique non volatil est choisi parmi les composés azotés oligomères ou polymères.

5. Réacteur pour matières solides selon les revendications 1, 3 ou 4, **caractérisé en ce que** le réacteur pour matières solides est un autoclave à agitation, un réacteur à lit fluidisé, un réacteur à lit fluidisé et à agitation, un réacteur à lit fluidisé présentant un lit fluidisé circulant ou un réacteur tubulaire.

6. Procédé pour le revêtement d'un réacteur pour matières solides destiné à la réalisation de réactions en phase gazeuse, et d'éléments constitutifs d'installation destinés au maniement de matières solides à mouvement fluidisé, **caractérisé en ce que** l'on traite leurs parois internes avec une poly-α-oléfine à son point de ramollissement et avec un agent antistatique non volatil.

7. Mise en oeuvre d'un réacteur revêtu selon les revendications 1 et 3 à 5, pour la polymérisation de α-oléfines.

8. Procédé pour la polymérisation ou la copolymérisation de α-oléfines en phase gazeuse, à une température comprise entre 30°C et 150°C et à une pression comprise entre 5 bars et 80 bars, en employant un catalyseur à support, **caractérisé en ce que** l'on réalise la polymérisation dans un réacteur pour matières solides revêtu selon l'une quelconque des revendications 1, 3, 4 ou 5.
